## Europäisches Patentamt

## European Patent Office

## Office européen des brevets

(19)

(11) Veröffentlichungsnummer: **0 204 694**
**B1**

(12) **EUROPÄISCHE PATENTSCHRIFT**

(45) Veröffentlichungstag der Patentschrift:
**05.07.89**

(51) Int. Cl.⁴: **F 16 L 55/18, F 16 L 55/16**

(21) Anmeldenummer: **85900039.0**

(22) Anmeldetag: **14.12.84**

(86) Internationale Anmeldenummer:
**PCT/CH 84/00197**

(87) Internationale Veröffentlichungsnummer:
**WO 86/03818 (03.07.86 Gazette 86/14)**

(54) **VORRICHTUNG ZUR DURCHFÜHRUNG VON AUSBESSERUNGSARBEITEN AN EINER SCHADHAFT GEWORDENEN, NICHTBEGEHBAREN ROHRLEITUNG.**

(43) Veröffentlichungstag der Anmeldung:
**17.12.86 Patentblatt 86/51**

(45) Bekanntmachung des Hinweises auf die Patenterteilung:
**05.07.89 Patentblatt 89/27**

(84) Benannte Vertragsstaaten:
**AT BE CH DE FR GB LI LU NL SE**

(56) Entgegenhaltungen:
**EP-A- 0 029 343**
**WO-A-83/03457**
**GB-A- 1 331 602**

(73) Patentinhaber: **Kunststoff-Technik AG Himmler, Leimbachstrasse 38, CH-8041 Zürich (CH)**

(72) Erfinder: **HIMMLER, Erich, Im oberen Boden 142, CH-8049 Zürich (CH)**

(74) Vertreter: **Siebert, Rolf, Dipl.-Masch.Ing.ETH, p.A. PATENTANWALTSBUREAU R.A. MASPOLI Postfach 191, CH-8053 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Vorrichtung zur Durchführung von Ausbesserungsarbeiten an einer schadhaft gewordenen, nichtbegehbaren Rohrleitung.

Im Dokument CH-A-640 623 bzw. im Dokument EP-A-0 025 204 sind ein Verfahren und eine Vorrichtung zum Abdichten einer undichten Stelle in einer nichtbegehbaren, unterirdisch verlegten Rohrleitung beschrieben. Mit jenem Verfahren und jener Vorrichtung kann eine solche Rohrleitung, also eine von einem Durchmesser von etwa 25 bis 100 cm, von innen her repariert werden, wenn in ihr Undichtigkeiten auftreten.

Jene Vorrichtung weist unter anderem vorzugsweise mehrere, auf einem Wagen angebrachte Bohrer auf, welche radial von einer gemeinsamen, in Längsrichtung des Wagens sich erstreckenden Hohlwelle abstehen und in dieser Radialrichtung verschiebbar sind. Die Bohrer bohren an derjenigen Stelle, die durch eine Fernsehkamera auf einem kleinen, dem genannten Wagen vorausfahrenden Wagen lokalisiert worden ist, je ein radiales Loch in die Rohrleitung.

Durch die hohlen Bohrer wird dann durch das Loch hindurch ein Dichtungsmittel in Form eines Kunststoffgels in das die Rohrleitung umgebende Erdreich gespritzt, das in demselben aushärtet und so die schadhafte Stelle dichtend abschliesst.

Nun zeigt es sich aber, dass in solchen Rohrleitungen neben den erwähnten, meist auf Korrosion zurückzuführenden Schäden auch andere Schäden entstehen können. Während bei den erstgenannten Schäden üblicherweise die von der Rohrleitung zu bewältigende Wassermenge ansteigt, weil durch die schadhaften Stellen Wasser aus dem umgebenen Erdreich in die Leitung gelangt, können umgekehrt auch Schäden auftreten, die den Abfluss behindern. So kommt es vor, dass bei einer Rohrleitung, die am Rande einer Strasse oder unter einem Winkel zu dieser verläuft, Wurzeln von Bäumen oder Sträuchern eine schadhafte Stelle finden, diese durchdringen und in die Rohrleitung hinein weiterwachsen. Andere Verstopfungen entstehen durch Kalkablagerungen im Innern der ansonst intakten Rohrleitung. Oft kommt es auch vor, dass an die bestehende Rohrleitung eine neue seitlich in diese eingeleitet wird; hierbei wird dann die neue Leitung in ein Loch in der Rohrwand der bestehenden Leitung eingeführt und mit dieser verbunden. Die Mündung der neuen Rohrleitung ragt dann aber in das Lichtraumprofil der alten Rohrleitung hinein und verringert dieses. Ebenfalls schon vorgekommen ist es, dass bei Bauten irgendwelcher Art der Lageplan des bestehenden Rohrleitungsnetzes nicht konsultiert wurde oder dass er falsch war, so dass die zur Sicherung der neuen Bauten bzw. des Erdreichs verwendeten Erdanker bei ihrem Eintreiben unbemerkt die bestehende Rohrleitung durchdrangen und damit ebenfalls deren Querschnitt beeinträchtigen, besonders wenn an einem solchen Hindernis sich später Schmutz staut, der vom Abwasser mitgeführt wird.

Für solche Reparaturen sind schon mehrere Vorrichtungen bekannt geworden. Jede derselben weist im wesentlichen einen Wagen mit Längs- und Querwänden, eine Fernsehkamera zum Auffinden und Lokalisieren der auszubessernden Stellen in der Rohrleitung und einen um die Längsachse des Wagens schwenkbaren Werkzeughalter für ein quer zu dieser Längsachse angeordnetes, auswechselbares Werkzeug auf, der ein mittels einer mit der Längsachse des Wagens zusammenfallenden Drehachse, die von einem Antrieb in Drehung versetzbar ist, über einen Bereich von mindestens einer Umdrehung schwenkbarer Bearbeitungskopf ist, welcher aus einem quer zur Längsachse verschiebbaren Vorschubzylinder mit Antrieb für eine Welle und für ein auf dieser angeordnetes Mittel zur Befestigung des auswechselbaren Werkzeuges sowie im weiteren aus einem Zylinderkolbenaggregat besteht, welches unabhängig von der Drehstellung des Bearbeitungskopfes den Vorschubzylinder an beidseitig desselben angeordneten Führungsstangen quer zur Längsachse des Wagens verschiebt.

Vorrichtungen dieser Art sind z.B. durch die Druckschriften WO-A-83/03 457 und EP-A-0 029 343 bekannt geworden. Diejenige nach der erstgenannten Druckschrift besteht im wesentlichen aus mehreren konzentrischen Rohren, von denen das innerste Rohr teleskopartig aus den anderen heraus verschiebbar ist. Es trägt an seinem Ende den im wesentlichen aus Motor und Werkzeug bestehenden Bearbeitungskopf. Dieser ist an Gleitstangen quer zur Längsachse der Vorrichtung verschiebbar, die am Ende dieses Rohres angebracht ist.

Im Prinzip ähnlich ist die Vorrichtung nach der zweitgenannten Druckschrift. Weil auch sie, wie die erste Vorrichtung, üblicherweise auf Kufen steht, muss auch bei ihr der Bohrkopf in Längsrichtung verschiebbar sein, wozu eine längsverschiebbare Welle vorgesehen ist. An deren Ende sind Gleitschienen und Zahnstangen zur Querverschiebung des Bohrkopfes angebracht.

Beiden Vorrichtungen ist gemeinsam, dass nicht nur das Gewicht des Bohrkopfes, sondern vor allem auch die bei der Arbeit des Bohr- oder Fräswerkzeuges entstehenden beachtlichen, auf das Werkzeug und damit den Bohrkopf einwirkenden Druckkräfte sowie gegebenenfalls noch weitere Kräfte direkt auf diejenigen Organe, also Gleitschienen und Zahnstangen, übertragen werden, welche die genannte Querverschiebung sicherstellen müssen. Dies ist nicht ganz unproblematisch, denn diese Verschiebung muss gerade dann gewährleistet sein, wenn die genannten Kräfte voll wirken; man denke nur z.B. an einen Bohrer, der sich in das von ihm gebohrte Loch hineinarbeitet. Ist der Widerstand wegen der Härte des zu bohrenden Materials besonders gross, besteht die Gefahr, dass der Vorschub des Werkzeuges infolge Verbiegung der genannten Organe und damit wegen Klemmens des Bohrkopfes in denselben nicht mehr funktioniert.

Die erfindungsgemässe Vorrichtung vermeidet diese Nachteile, indem sie eine ganz andere Lagerung des Bohrkopfes vorschlägt. Diese ist dadurch gekennzeichnet, dass an der äusseren Seite der dem Bearbeitungskopf zugewendeten Querwand des mit Eigenantrieb versehenen Wagens ein Lager angebracht ist, das, um von dem auf der inneren Seite dieser Querwand angeordneten Antrieb rotiert zu werden, mit der durch die Querwand hindurchführenden Drehachse starr verbunden ist, und dass es einen von der Längsseite des Wagens her gesehenen L-förmigen Querschnitt aufweist, wobei auf dem in Längsrichtung des Wagens verlaufenden Schenkel der L-Form ein mit ihm starr verbundener Drehbügel aufgesetzt ist, der zwischen seinen Enden den Bearbeitungskopf mit dem Vorschubzylinder, welcher mit seiner Stirnseite gegen den zu diesem Schenkel senkrecht verlaufenden anderen Schenkel des L-förmigen Drehlagers anliegt, an zwei einander gegenüberliegenden Stellen aufnimmt, die sich im wesentlichen in einer der Rotationsachse des Werkzeugbefestigungsmittels beziehungsweise des Werkzeuges wenigstens sehr nahen oder mit ihr zusammenfallenden, durch die ebenfalls vollständig innerhalb des Bearbeitungskopfes angeordneten Führungsorgane des Vorschubzylinders gebildeten, quer zur Längsachse der Vorrichtung liegenden Ebene befinden, um die auf dasselbe während des Betriebes einwirkenden Druckkräfte ohne Biegebeanspruchung des Bearbeitungskopfes, des in ihm angeordneten Vorschubzylinders und der genannten Führungsorgane direkt in den Drehbügel über dessen genannten Enden und von diesem aus in das Drehlager zu leiten.

Auf diese Weise werden die der Verschiebung des Werkzeuges dienenden Organe von der Beanspruchung mindestens zum grössten Teil entlastet, vor allem von den gefährlichen Biegespannungen, die bei den bisherigen Vorrichtungen deswegen auftraten, weil die Organe nicht in der Antriebsachse des Werkzeuges lagen.

Die Erfindung wird anhand der vorliegenden Zeichnungen beispielsweise näher erläutert, es zeigen

Fig. 1 einen Längsschnitt durch eine Rohrleitung, mit der darin befindlichen Vorrichtung in Ansicht, längs der Linie I - I in Fig. 2,

Fig. 2 einen Querschnitt durch die Rohrleitung längs der Linie II - II in Fig. 1, mit der Vorrichtung in Normalstellung, und

Fig. 3 einen gleichen Querschnitt wie Fig. 2, mit der Vorrichtung beim Abfräsen des in die Rohrleitung hineinragenden Teiles einer Zweigleitung.

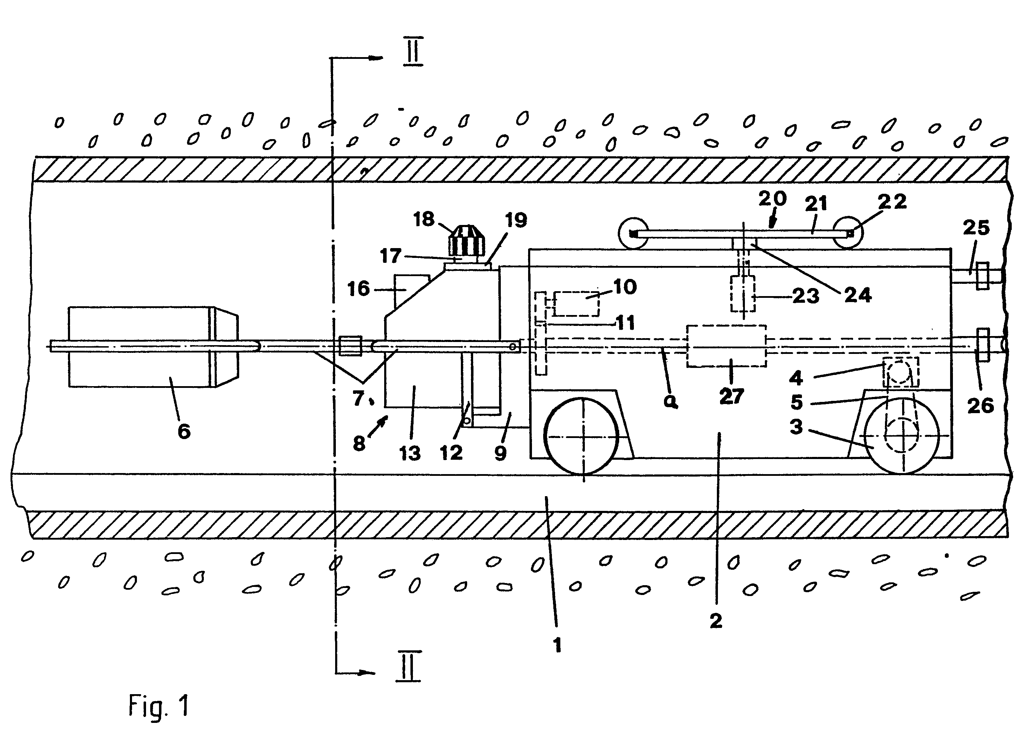

Mit 1 ist die Rohrleitung bezeichnet, die einen solchen Durchmesser aufweist, dass sie unmöglich zu begehen ist. In ihr ist ein Wagen 2 eingeführt worden und zwar durch einen hier nicht dargestellten, von der Oberfläche, also z.B. der Strasse, bis zur Rohrleitung führenden vertikalen Schacht, der üblicherweise wesentlich grösser ist als die Rohrleitung selber. Der Wagen ist auf seinen Rädern 3, von welchen wenigstens diejenigen auf einer der beiden Achsen durch einen Hydraulikmotor 4 über eine Kette 5 angetrieben werden, ferngesteuert bis zu einer hier nicht dargestellten schadhaften Stelle gefahren worden. Diese Stelle ist durch eine mit einer Lichtquelle versehene Fernsehkamera 6, welche auf einer gekröpften, zweiteiligen Halterung 7 montiert ist, lokalisiert worden. Der Wagen 2 weist im weiteren einen Werkzeughalter in Form eines Bearbeitungskopfes 8 auf. Dieser ist in einem Lager 9, das an der einen Stirnseite des Wagens 2 angebracht ist, drehbar und zwar so, dass er mindestens eine volle Umdrehung machen kann. Diese Umdrehungen werden von einem im Wageninnern angebrachten ersten Hydraulikmotor 10 über ein Getriebe 11 bewirkt (Fig. 1). Das grosse Zahnrad des Getriebes 11 legt die Drehachse a des Bearbeitungskopfes 8 fest, die auch die Längsachse des Wagens 2 bildet. Von Vorteil ist es, wenn sie mit der Rohrleitungsachse zusammenfällt, weil dann der Bearbeitungskopf 8 bei seiner Schwenkung um 360° seinen Abstand von der Rohrleitungswand praktisch beibehält.

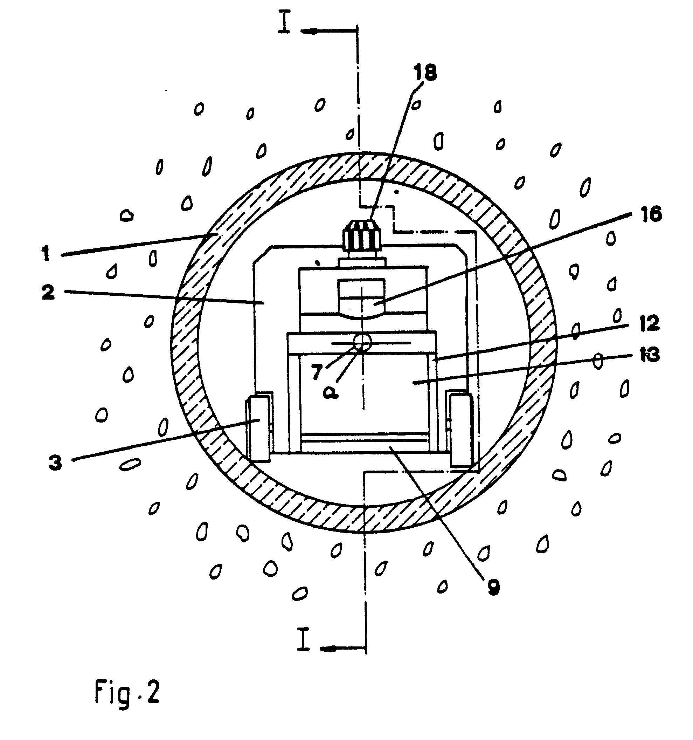

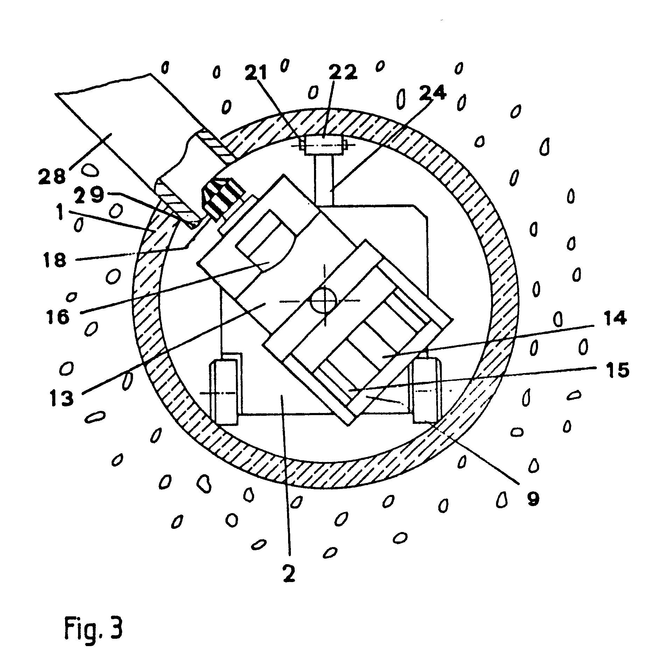

Der Bearbeitungskopf 8 ist wegen seines Gewichtes in einem Drehbügel 12 gelagert, der am Lager 9 starr angebracht ist, und weist einen Vorschubzylinder 13 auf, der in Fig. 2 im eingefahrenen, in Fig. 3 jedoch im ausgefahrenen Zustand dargestellt ist. Zum Ein- und Ausfahren quer zur Längsachse a dient ein hydraulisches Zylinderkolbenaggregat 14, welches den Vorschubzylinder 13 an Führungsstangen 15 radial zum Rohr und zwar unabhängig von der Drehstellung des Bearbeitungskopfes verschiebt. Der Vorschubzylinder 13 enthält einen zweiten Hydraulikmotor 16, der zum Antrieb einer Welle 17 für ein Werkzeug 18, hier einen Fräser, dient. Die Welle 17 trägt zweckmässig einen Montageflansch 19, auf welchem auch andere, meist scheibenförmige Werkzeuge wie Trennscheiben, Schmirgelscheiben etc., anstelle des hier gezeigten Fräsers angebracht werden können. Der zweite Hydraulikmotor 16 verschiebt sich also radial mit dem Vorschubzylinder 13 bei dessen Ausfahren. Der Vorschubzylinder 13 seinerseits kann mit dem ganzen Bearbeitungskopf 8 um mindestens eine volle Umdrehung rotieren. Mit ihm rotieren auch die Halterung 7 und die in der letzteren angebrachte Fernsehkamera 6 samt Beleuchtung um dieselbe Achse; da die Halterung 7 jedoch am Lager 9 angebracht ist, verschiebt sich die Kamera 6 nicht auch noch radial, also quer zur Längsachse a. Sie ist daher so ausgelegt, dass sie den ganzen Vorschubbereich erfasst.

Für gewisse Arbeiten, vor allem für das Ausbessern örtlich begrenzter Schadstellen, muss der Wagen 2 völlig unbeweglich sein. Hierzu dient eine Blockiervorrichtung 20. Sie besteht aus einem elastisch federnden länglichen Bügel 21, an dessen Enden zwei Walzen 22 angebracht sind. Ein im Wageninnern vorgesehenes hydraulisches Aggregat 23 schiebt einen Bügelhalter 24 nach aussen. Dadurch kommen vorerst die Walzen 22 zum Anliegen an der Rohrleitungswand; weil der Bügel 21 aber elastisch ist, biegt er sich durch, bis auch er im Bereich des Bügelhalters an der Rohrleitungswand anliegt. Damit ist der Wagen blockiert. Die dargestellte Blockiervorrichtung hat den Vorteil, dass sie vom Durchmesser der Rohrleitung unabhängig ist. Sie ist in Fig. 1 im nichtbetätigten, in Fig. 3 im ausgefahrenen Zustand gezeigt; in Fig. 2 ist sie der Übersicht halber nicht dargestellt.

Die Werkzeugantriebswelle 17 ist hohl. Sie kann auch mit einem hohlen Bohrer bestückt werden, der dann ein Loch in die Rohrwandung bohrt. Durch das hohle Innere der Welle 17 und des Bohrers kann vorerst Wasser zur Kühlung und später, nach Durchstossen der Rohrwand, ein Kunststoffgel eingegeben werden, wie dies schon aus den eingangs erwähnten Patentschriften bekannt ist. Zur Heranführung dieser Flüssigkeiten sowie der für die Hydraulikmotoren und Aggregate benötigten Hydraulikflüssigkeit dienen zwei Leitungen 25, 26. Die eine enthält einen Wasserschlauch und darum herum die elektrischen Kabel für die Fernsehkamera und die Beleuchtung, während die andere verschiedene Leitungen für die Antriebsflüssigkeit sowie zwei Leitungen für die beiden Komponenten des Gels enthält, die dann in einem Mischkopf 27 auf dem Wagen 2 miteinander vermengt werden. Beide Leitungen führen zum Servicefahrzeug, das sich oberhalb des genannten vertikalen Schachtes befindet und einen Fernsehmonitor sowie ein Steueraggregat enthält, von dem aus alle Bewegungen des Wagens 2 und seiner Organe gesteuert werden. Die Leitungen für die Antriebsflüssigkeit sind hier in mehrfacher Ausführung vorhanden, damit sowohl der Antrieb 4 für den Wagen 2 als auch der Antrieb 10 für die Schwenkung des Bearbeitungskopfes 8 und der Antrieb 16 für die Welle 17 unabhängig voneinander und bei gewissen, noch darzustellenden Arbeiten auch gleichzeitig miteinander vom Steueraggregat aus betätigt werden können. Bei Bedarf können auch mehr als zwei Leitungen verbunden sein, besonders dann, wenn noch Druckluft gebraucht wird.

Nunmehr soll anhand der Fig. 3 erläutert werden, was mit dem aufgesetzten Werkzeug 18, hier z.B. mit dem Fräser, alles ausgeführt werden kann. In Fig. 3 ist ein Zweigrohr 28 dargestellt, das an irgendeiner Stelle nachträglich oder beim Neubau des Leitungsnetzes nicht genau oder nicht bündig in die Rohrleitung 1 eingeführt worden ist, wobei die letztere nur freigelegt, nicht aber ausgegraben worden ist. Das Zeigrohr war in eine vorher angebrachte Öffnung im Mantel der Rohrleitung 1 eingeschoben und dann mit der Rohrleitung in irgendeiner Weise verbunden worden, im Fall einer Zementrohrleitung durch Zement oder dergleichen. Wie man sieht, ragt das Zweigrohr noch mit einem Abschnitt 29 in die Rohrleitung 1 hinein und verringert dadurch deren Querschnitt; hauptsächlich aber bedeutet dieser Abschnitt eine Turbulenzstelle für das Wasser und damit bei grosser Wasserführung eine Staustelle, die nun entfernt werden muss. Zu diesem Zweck wird der Fräser 18 in Rotation versetzt, dann wird der Bearbeitungskopf 8 vorerst in die Ausgangslage gedreht und hierauf unter gleichzeitiger Verschiebung des Wagens 2 langsam hin und her geschwenkt. Da dieser Fräser eine konische Form aufweist, ist ein sauberes Abtrennen des Abschnittes 29 möglich. Mit denselben Bewegungen lassen sich vor allem auch Risse in der Rohrleitung ausbessern, die sich oft über eine längere Distanz hinziehen, dabei aber sehr unregelmässig verlaufen, d.h. streckenweise parallel zur Rohrlängsachse, dann wieder unter einem Winkel zu dieser. Durch langsames Vorschieben des Wagens 2 und durch Hin- und Herdrehen des Bearbeitungskopfes 8 kann man dem Riss genau folgen und die Rohrleitung ausfräsen; nachher wird die nun entstandene Nut mit einem Epoxyharz verleimt und ausgefüllt. Diese Aufgabe wird jedoch von einer besonderen Spachtelvorrichtung übernommen. In die Rohrleitung hineinragende Wurzeln werden ausgebohrt; hier stehen der Bearbeitungskopf 8 und der Wagen praktisch still. Das beim Ausbohren der Wurzeln entstandene Loch in der Rohrleitung wird in gleicher Weise wie die vorhin erwähnte Nut ausgefüllt.

Statt des Fräsers können auch andere rotierende Werkzeuge aufgesetzt werden, z.B. Drahtbürsten, Polier- oder Metalltrennscheiben; die letzteren eignen sich besonders zum Abtrennen von quer in die Rohrleitung hineinragenden Erdankern, die aus Versehen dort hinein getrieben worden sind.

Die gesamten Bewegungen werden wie erwähnt vom Servicewagen aus ferngesteuert; Einzelheiten sind schon im Detail aus den genannten beiden Patentschriften entnehmbar.

Die zum Aufsetzen verschiedener Werkzeuge dienende Welle 17 ist hohl. Sie ist an ihrem rückwärtigen, im Inneren des Vorschubzylinders 13 befindlichen Ende über die Achse des Bearbeitungskopfes 8 einerseits an den Mischkopf 27 und anderseits direkt an eine Wasserleitung, die in einer der Leitungen 25, 26 angeordnet ist, angeschlossen. Damit ist diese Vorrichtung ebenso wie die in den beiden Patentschriften beschriebene Vorrichtung in der Lage, Abdichtungsarbeiten an der Aussenseite der Rohrleitung durch Einspritzen des Gels in das Erdreich durchzuführen. Allerdings steht jetzt nur noch ein Bohrer zur Verfügung, der aber dank der vollständigen Rotationsmöglichkeit des Bearbeitungskopfes 8 alle Stellen längs des Umfanges der Rohrinnenwand erreichen kann. Um ein Verspritzen des Gels, also des Dichtungsmittels, beim Austritt aus dem hohlen Bohrer zu vermeiden, ist wie bei der erwähnten Vorrichtung ein Abdeckschild vorgesehen, das jedoch nicht mehr einen festen Bestandteil bildet, sondern auf den Flansch 19 aufgeschraubt wird.

**Patentansprüche**

1. Vorrichtung zur Durchführung von Ausbesserungsarbeiten an einer schadhaft gewordenen nichtbegehbaren Rohrleitung, welche Vorrichtung einen Wagen (2) mit Längs- und Querwänden, eine Fernsehkamera (6) zum Auffinden und Lokalisieren der auszubessernden Stellen in der Rohrleitung (1) und einen um die Längsachse (a) des Wagens (2) schwenkbaren Werkzeughalter (8) für ein quer zu dieser Längsachse angeordnetes, auswechselbares Werkzeug (18) aufweist, der ein mittels einer mit der Längsachse (a) des Wagens zusammenfallenden Drehachse, die von einem Antrieb (10, 11) in Drehung versetzbar ist, über einen Bereich von mindestens einer Umdrehung schwenkbarer Bearbeitungskopf ist, welcher aus einem quer zur Längsachse (1) verschiebbaren Vorschubzylinder (13) mit Antrieb (16) für eine Welle (17) und für ein auf dieser angeordnetes Mittel (19) zur Befestigung des auswechselbaren Werkzeuges (18) sowie im weiteren aus einem Zylinderkolbenaggregat (14) besteht, welches unabhängig von der Drehstellung des Bearbeitungskopfes (8) den Vorschubzylinder (13) an beidseitig desselben angeordneten Führungsstangen (15) quer zur Längsachse des Wagens (2) verschiebt, dadurch gekennzeichnet, dass an der äusseren Seite der dem Bearbeitungskopf (8) zugewendeten Querwand des mit Eigenantrieb (4) versehenen Wagens (2) ein Lager (9) angebracht ist, das, um von dem auf der inneren Seite dieser Querwand angeordneten Antrieb (10, 11) rotiert zu werden, mit der durch die Querwand hindurchführenden Drehachse starr verbunden ist, und dass es einen von der Längsseite des Wagens her gesehenen L-förmigen Querschnitt aufweist, wobei auf dem in Längsrichtung des Wagens verlaufenden Schenkel der L-Form ein mit ihm starr verbundener Drehbügel (12) aufgesetzt ist, der zwischen seinen Enden den Bearbeitungskopf (8) mit dem Vorschubzylinder (13), welcher mit seiner Stirnseite gegen den zu diesem Schenkel senkrecht verlaufenden anderen Schenkel des L-förmigen Drehlagers (9) anliegt, an zwei einander gegenüberliegenden Stellen aufnimmt, die sich im wesentlichen in einer der Rotationsachse des Werkzeugbefestigungsmittels (19) beziehungsweise des Werkzeuges (18) wenigstens sehr nahen oder mit ihr zusammenfallenden, durch die ebenfalls vollständig innerhalb des Bearbeitungskopfes (8) angeordneten Führungsorgane (15) des Vorschubzylinders gebildeten, quer zur Längsachse der Vorrichtung liegenden Ebene befinden, um die auf dasselbe während des Betriebes einwirkenden Druckkräfte ohne Biegebeanspruchung des Bearbeitungskopfes (8), des in ihm angeordneten Vorschubzylinders (13) und der genannten Führungsorgane (15) direkt in den Drehbügel (12) über dessen genannten Enden und von diesem aus in das Drehlager (9) zu leiten.

2. Vorrichtung nach Anspruch 1, dadurch gekennzeichnet, dass das Drehlager (9) auch eine am Bearbeitungskopf (8) beidseitig vorbeiführende Halterung (7) aufweist, welche die Fernsehkamera (6) derart trägt, dass diese in der Längsachse (a) liegt, mit dem Drehlager (9) und dem Bearbeitungskopf (8) rotiert und so eingestellt ist, dass sie den gesamten Vorschubbereich des Vorschubzylinders und damit auch des Werkzeuges (18) erfasst.

**Claims**

1. Apparatus for carrying out repair works on a damaged pipeline which a person cannot get through, said apparatus comprising a carriage, a television camera for finding and locating the spots to be repaired in the pipeline and a tool holder pivotable about the longitudinal axis of the carriage for a tool that is arranged transversely and is exchangeable, said tool holder being a working head rotatable by at least one full turn by means of a drive shaft coaxial with the longitudinal axis of the carriage and rotated by a drive, said working head consisting of a feed cylinder displaceable transversely to the longitudinal axis and having a drive for a shaft and for means arranged on that shaft for clamping the exchangeable tool and further consisting of a hydraulic cylinder that displaces the feed cylinder along guide rods arranged on both sides of it in a direction transverse to the longitudinal axis of the carriage independently of the position of the working head, wherein on the outside of the end wall of the self-propelled carriage (2) facing the working head (8) there is a bearing (9) which is rigidly connected to said shaft in order to be driven by said drive (10, 11) located on the inner side of said end wall and which has an L-shaped cross section, a rotating shackle (12) rigidly mounted onto the leg of the L-shape that runs in longitudinal direction of the carriage, said shackle receiving between its ends, on two spots lying opposite of each other, the working head (8) with the feed cylinder (13) abutting with its face against the other log perpendicular to the first leg of the L-shaped bearing (9), said spots being substantially within a plane which is at least close to or coincides with the rotational axis of the tool clamping means (19) respectively the tool (18), that plane being defined by the guide rods (15) fully located within the working head (8) and lying transversely to the longitudinal axis of the carriage so that operational compressive forces are transmitted into the shackle (12) via its said ends and from the shackle into the rotational bearing (9) without imposing bending stresses onto the working head (8), onto the feed cylinder (13) inside of it and onto said guide rods (15).

2. Apparatus according to Claim 1, wherein the rotational bearing (9) also comprises a holder (7) bypassing the working head (8) on either side and supporting the television camera (6) in such a manner that the latter is in coincidence with the rotational axis, rotates with the bearing (9) and the working head (8) and is adjusted such as to cover the entire feed range of the feeding cylinder (13) and with it also the tool (18).

**Revendications**

1. Dispositif pour effectuer des travaux de réparation sur une conduite endommagée non accessible, ledit dispositif comprenant un véhicule (2) avec des parois longitudinales et transversales, une caméra de télévision (6) pour détecter et localiser les endroits à réparer dans la conduite (1) et un support d'outil (8) pouvant pivoter selon l'axe longitudinal (a) du véhicule (2) pour un outil (18) échangeable, disposé transversalement par rapport audit axe longitudinal, qui consiste en une tête de travail pouvant pivoter sur une zone d'au moins un tour complet au moyen d'un axe de rotation coincidant avec l'axe longitudinal (a) du véhicule, qui peut être mis en rotation par un entraînement (10, 11), ladite tête de travail se composant d'un cylindre d'avance (13) pouvant coulisser transversalement par rapport à l'axe longitudinal (a) avec un entraînement (16) pour un arbre (17) et pour un moyen (19) disposé sur celui-ci pour la fixation de l'outil (18) échangeable ainsi en outre que d'un ensemble cylindre-piston (14), qui fait coulisser, indépendamment de la position en rotation de la tête de travail (8) le cylindre d'avance (13) sur des tringles de guidage (15) disposées sur les deux côtés de celui-ci, dans une direction transversale à l'axe longitudinal du chariot (2), caractérisé en ce que du côté extérieur de la paroi transversale, dirigée vers la tête de travail (8), du véhicule (2) muni de son propre entraînement (4) est rapporté un coussinet (9) qui, pour pouvoir être mis en rotation par l'entraînement (10, 11) disposé sur le côté intérieur de cette paroi transversale, est monté rigide sur l'axe de rotation qui traverse la paroi transversale, et que vu du côté longitudinal du véhicule celui-ci présente une section en coupe en forme de L, sur la branche de la structure en L s'étendant dans la direction longitudinale du véhicule étant monté un étrier pivotant (12) relié rigidement à celle-ci, qui entre ses deux extrémités enserre la tête de travail (8) avec le cylindre d'avance (13), celui-ci venant en appui par sa face frontale contre l'autre branche du coussinet de pivotement (9) en forme de L s'étendant perpendiculairement à ladite branche, en deux endroits en face l'un par rapport à l'autre, qui se trouvent essentiellement dans un plan situé transversalement par rapport à l'axe longitudinal du dispositif coincidant exactement ou au moins de très près avec l'axe de rotation du moyen (19) de fixation de l'outil, respectivement de l'outil (18), et formé par les organes de guidage (15) du cylindre d'avance disposés également totalement à l'intérieur de la tête de travail (8), afin que les forces de pression agissant sur celui-ci pendant le fonctionnement soient dirigées directement sur l'étrier pivotant (12) par le biais desdites extrémités et à partir de celui-ci dans le coussinet de pivotement (9) sans sollicitation en flexion de la tête de travail (8), du cylindre d'avance (13) disposé dans celle-ci et desdits organes de guidage (15).

2. Dispositif selon la revendication 1, caractérisé en ce que le coussinet de pivotement (9) comporte également une fixation (7) s'étendant des deux côtés de la tête de travail (8) et qui supporte la caméra de télévision (6) de manière telle que celle-ci soit disposée dans l'axe longitudinal (a), qu'elle tourne avec le coussinet de pivotement (9) et la tête de travail (8) et qu'elle soit réglée de manière à appréhender toute la zone d'avance du cylindre d'avance et donc ainsi celle de l'outil (18).

Fig. 1

Fig·2

Fig. 3